# EUROPEAN PATENT SPECIFICATION

(11) **EP 0 825 338 B1**
(45) Date of publication and mention of the grant of the patent: **13.11.2002**
(21) Application number: 97113866.4
(22) Date of filing: 11.08.1997
(51) Int. Cl.: F02D 41/38, F02D 33/02, F02D 11/10

(54) **Intake throttle apparatus for diesel engine**
Ansaugluftdrosselvorrichtung für einen Dieselmotor
Dispositif d'étranglement d'admission d'air pour moteur diesel

(30) Priority: 12.08.1996 JP 21245196; 09.06.1997 JP 15097597
(43) Date of publication of application: 25.02.1998
(73) Proprietor: AISAN KOGYO KABUSHIKI KAISHA, Obu-shi Aichi-ken (JP); TOYOTA JIDOSHA KABUSHIKI KAISHA, Aichi-ken (JP)
(72) Inventor: Katoh, Yukiya, Obu-shi, Aichi-ken (JP); Takeuchi, Hitoshi, Obu-shi, Aichi-ken (JP); Ito, Yoshiyasu, Toyota-shi, Aichi-ken (JP)
(74) Representative: Blumbach, Kramer & Partner GbR

(56) References cited:
- US-A- 4 467 601
- US-A- 4 747 264
- PATENT ABSTRACTS OF JAPAN vol. 015, no. 212 (M-1118), 30 May 1991 & JP 03 057841 A (HONDA MOTOR CO LTD), 13 March 1991
- PATENT ABSTRACTS OF JAPAN vol. 015, no. 212 (M-1118), 30 May 1991 & JP 03 057852 A (HONDA MOTOR CO LTD), 13 March 1991
- PATENT ABSTRACTS OF JAPAN vol. 011, no. 310 (M-630), 9 October 1987 & JP 62 096756 A (TOYOTA MOTOR CORP;OTHERS: 01), 6 May 1987

## Description

### BACKGROUND OF THE INVENTION

### 1. Field of the invention

This invention relates generally to an intake throttle apparatus for diesel engines, and more particularly to such an intake throttle apparatus of the type in which a throttle valve is opened and closed by a step motor.

### 2. Description of the prior art

Japanese Laid-Open utility model publication No. 63-198458 (1988) discloses an intake throttle apparatus for diesel engines wherein a throttle valve for opening and closing an intake passage is actuated by a step motor. In the intake throttle apparatus of the disclosed type, a computer performs operations to calculate the number of steps of the step motor well adapted for the running status of the diesel engine. The intake throttle apparatus includes a motor control device for controlling the step motor so that the number of steps thereof agrees with the value calculated by the computer. Thus, an opening angle of the throttle valve is controlled by the computer so as to be well adapted for the running status of the diesel engine.

In the prior art, however, no measures have been taken for calibrating the number of steps of the step motor in a suitable synchronous manner. Consequently, an actual number of the steps of the step motor sometimes disagrees with that controlled by the motor control device or calculated by the computer. For example, the actual number of steps takes the value S2 when the number of steps is controlled by the motor control device so as to take the value S1. This difference continuously occurs after the loss of synchronism of the step motor. Once the loss of synchronism has occurred, the loss results in the difference between the actual number of steps and that counted by the computer.

To cope with the problem that the number of steps counted by the computer differs from the actual one, the prior art has provided a method in which the number of steps of the step motor is initialized when the step motor is turned on or when the engine is started (Japanese Laid-Open Patent Publication No. 61-244845). This method is referred to as "motor counter initializing process" or "initialization process." In the prior art, however, the processing for initializing the number of steps is performed only when the step motor is turned on. Accordingly, when the number of steps counted by the computer during running of the engine disagrees with the actual number of steps, the disagreement cannot be solved while the engine is running. The processing for initializing the number of steps is not performed until the step motor is turned off and thereafter turned on again.

Japanese Laid-Open Patent Publications Nos. 3-57852 and 6-101551 disclose an initialization process. The initialization process is executed in association with a traction control of the engine, and it is not possible to adopt this technique to an engine without the traction control.

JP 03057841 A discloses an intake throttle apparatus for a spark ignited engine comprising a throttle valve for opening and closing an intake passage; a step motor for opening and closing the throttle valve; a reference position detecting means for detecting the throttle valve occupying a reference position provided within a high opening range of the throttle valve (i.e. around 50°), thereby delivering a reference position signal for the control of the step motor. The throttle valve can be moved to its reference position to perform an operational check of the system only after turning on an ignition switch without the engine itself is running or utmost during a very first running-up status of the engine after its start. A new initializing of the number of steps of the step motor or a new operational check is only possible after shutting down the engine and again turning on the ignition switch.

US-A-4,747,264 discloses a diesel engine, which is provided with a throttle valve for the purpose of regeneration of a soot filter. There is no disclosure of any operational check of the throttle valve or its actuating system.

### SUMMARY OF THE INVENTION

Therefore, an object of the present invention is to realize a novel technique solving the defect in the prior art that, when the loss of synchronism of the step motor etc. during running of the diesel engine results in deviation between the number of steps counted by the computer and the actual number of steps, the deviation cannot be solved until the step motor is turned off and thereafter turned on again, the technique solving the deviation during running of the engine when it occurs during running of the engine.

A solution of this object is achieved with an intake throttle apparatus according to appended claim 1.

In the normal running of the diesel engine, the throttle valve is often opened to such an extent that an intake flow rate larger than the one required by the engine is secured. This occurs, for example, when the engine is outside an exhaust gas recirculation (EGR) control area or when an EGR rate is secured even when the engine is within the EGR control area. The intake flow rate required by the engine varies according to an engine speed. That is, the required intake flow rate is small when the engine speed is low, whereas the required intake flow rate is large when the engine speed is high. The throttle valve for the diesel engine needs to be opened to such an extent that the intake flow rate required by the diesel engine is secured. In this case, however, even when the throttle valve is opened to a larger extent than required, this does not substantially interfere with the running of the diesel engine. For example, almost no smoke is exhausted.

The intake throttle apparatus for a diesel engine according to the invention utilizes the above-described characteristic of the diesel engine so that the processing for initializing the number of steps can be performed while the diesel engine is running.

The step motor is driven during the normal running of the diesel engine so that the throttle valve occupies the reference position. A computer is on standby for the input of the reference position signal. The number of steps counted by the computer agrees with the actual one when the reference position signal is delivered to the computer in synchronism with the change of the number of steps counted by the computer to the initial value. On the other hand, the number of steps counted by the computer disagrees with the actual one when the reference position signal is delivered to the computer in nonsynchronism with the change of the number of steps counted by the computer to the initial value. In this case, the difference between the number of steps counted by the computer and the actual one can be solved when the number of steps counted by the computer is initialized upon input of the reference position signal.

In the diesel engine, the case frequently occurs where the intake flow rate does not substantially vary even when the throttle valve is controlled to be in the high opening range. Accordingly, the number of occasions for the throttle valve to be controlled into the high opening range is increased such that the processing for initializing the number of steps can frequently be performed. Consequently, even when the loss of synchronism of the step motor occurs during the normal running of the diesel engine, the step number initialization processing can immediately be performed, whereupon the disagreement can be prevented between the number of steps counted by the computer and the actual throttle opening.

The reference position is according to claim 2 preferably a full opening position of the throttle valve.

According to claim 3, the reference position returning means compares the diesel engine speed (the number of revolution of the diesel engine) and the opening degree of the throttle valve. Based on the results of comparison, the reference position returning means starts operation thereof.

According to claim 4, the intake throttle apparatus preferably comprises means for performing a processing for coping with an abnormal condition in a case where the number of steps of the step motor is outside an allowable range when the reference position signal is supplied to the initializing means.

Claim 5 characterizes an advantageous method how to generate a reference signal.

This invention will be understood better upon a reading of the following detailed description of the preferred embodiments and claims with reference to the accompanying drawings.

### BRIEF DESCRIPTION OF THE DRAWINGS

FIG. 1 is a front sectional view of the intake throttle apparatus of a first embodiment in accordance with the present invention;
FIG. 2 is a left-hand side view of the intake throttle apparatus;
FIG. 3 is a sectional view taken along line III-III in FIG. 1;
FIG. 4 illustrates a normal state of the power transmission incorporated in the intake throttle apparatus;
FIG. 5 illustrates a relief state of the power transmission;
FIG. 6 is a sectional view take along line VI-VI in FIG. 1;
FIGS. 7(a) and 7(b) schematically illustrate the construction of the intake throttle apparatus of the first embodiment;
FIGS. 8(a) and 8(b) schematically illustrate the construction of the intake throttle apparatus of a second embodiment in accordance with the present invention;
FIGS. 9(a) and 9(b) schematically illustrate the construction of the intake throttle apparatus of a third embodiment in accordance with the present invention;
FIG. 10 is a flowchart showing the processing for confirming the throttle valve occupying the full opening position when the engine starts;
FIG. 11 is a flowchart showing the processing for determining that the throttle valve occupies the full opening position, during the running of the engine;
FIG. 12 is a flowchart showing the processing for determining that the throttle valve occupies the full opening position when the engine stops;
FIG. 13 is a block diagram showing the arrangement of a control computer;
FIG. 14 is a timing chart showing the relationship between an output signal of the full opening position detecting switch and the throttle opening;
FIG. 15 is a graph showing a characteristic curve between the throttle opening degree and the intake flow rate;
FIG. 16 is a front sectional view of the intake throttle apparatus of a fourth embodiment in accordance with the present invention;
FIG. 17 is a right-hand side view of the intake throttle apparatus shown in FIG. 16;
FIG. 18 is a side view of the intake throttle apparatus shown in FIG. 16 with the cover plate being eliminated; and
FIG. 19 is a sectional view taken along line XIX-XIX in FIG. 16.

### DETAILED DESCRIPTION OF THE PREFERRED EMBODIMENTS

First to fourth embodiments in accordance with the present invention will now be described.

### First embodiment:

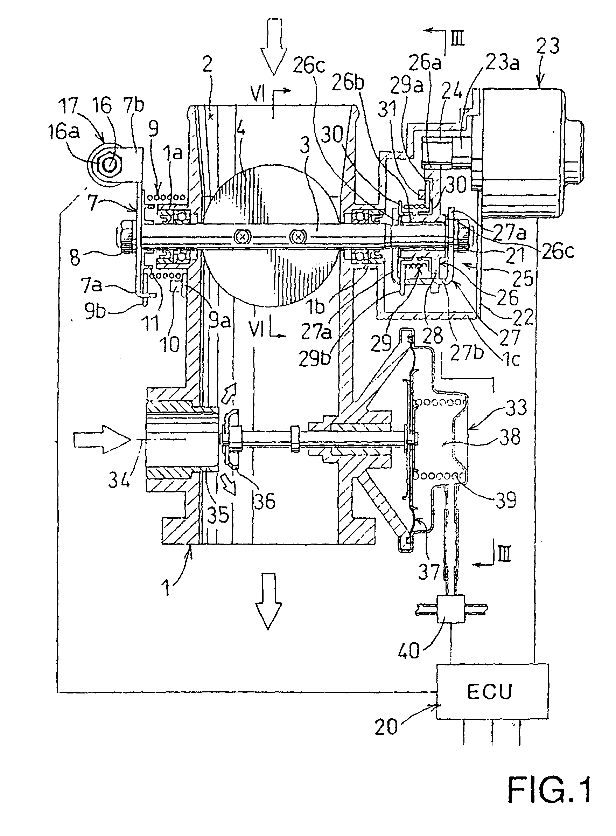

A first embodiment will be described with reference to the accompanying drawings. Referring to FIG. 1, the intake throttle apparatus of the first embodiment is shown. The intake throttle apparatus comprises a generally cylindrical main body 1 incorporated in an intake system of a diesel engine. The main body 1 has an intake passage 2 defined therein. The main body 1 includes left-hand and right-hand side walls through which both ends of a throttle shaft 3 extend to be rotatably mounted on bearing means respectively. Left and right bosses 1a and 1b are formed on both side surfaces of the main body 1 respectively. The bearing means and bearing seal members are fitted in the left-hand and right-hand bosses 1a and 1b respectively. The right-hand boss 1b is formed with a housing 1c enclosing a power transmission 25 incorporated into the end of the throttle shaft 3 as will be described later.

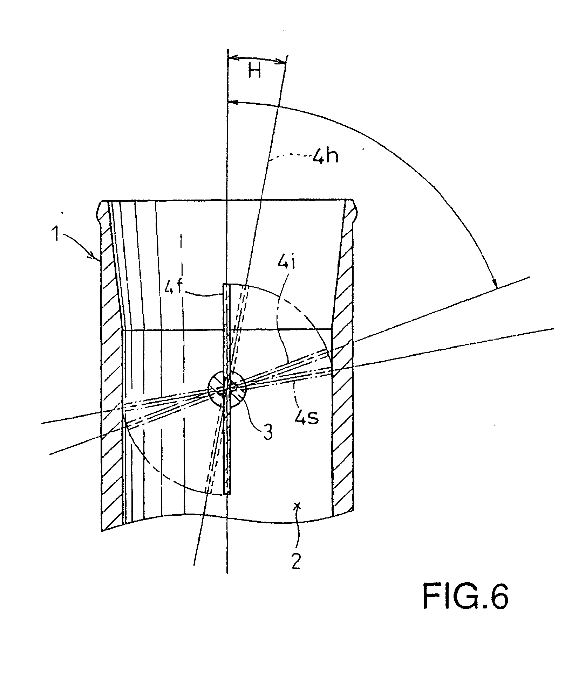

A throttle valve 4 for opening and closing the intake passage 2 is mounted on the throttle shaft 3. FIG. 6 is a sectional view taken along line VI-VI in FIG. 1. Solid line 4f in FIG. 6 denotes a full opening position of the throttle valve 4. Two-dot chain line 4s denotes a full closing position of the throttle valve 4 or an engine stop position. Chain line 4i denotes a half-opening or idle position of the throttle valve 4. The throttle valve 4 is opened and closed between the full opening and full closing positions 4f, 4s in the normal traveling. The throttle valve 4 is closed further from the half-opening position 4i to the completely closed position 4s when the engine is stopped. The diesel engine requires no ignition system and keeps running when once started. Accordingly, both fuel and air are desirably cut off when the diesel engine is reliably stopped. The throttle valve 4 needs to be full or completely closed when the engine is stopped. The range of about 10 degrees between the full opening position 4f of the throttle valve 4 and the position denoted by dotted line 4h in FIG. 6 is referred to as "high opening range H" as will be described in detail later.

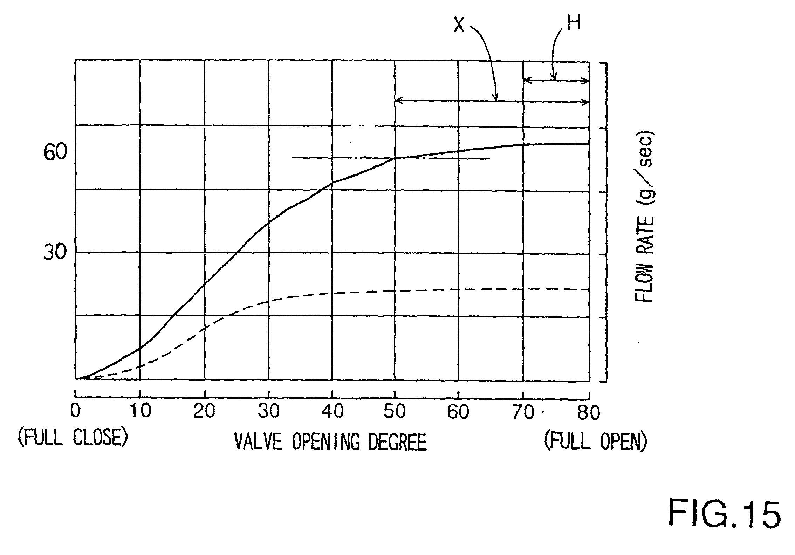

FIG. 15 shows an example of the relationship between a throttle opening degree (valve opening degree) of the throttle valve 4 and the intake flow rate. On one hand, solid line in FIG. 15 shows the relationship between the valve opening and the intake flow rate in the case where the diesel engine is in such a running status that a required intake flow rate is secured when the throttle valve is opened to 50 degrees or in a high-speed running status. The required intake flow rate is thus secured when the valve opening is 50 degrees, and the intake flow rate is not substantially increased such that the diesel engine is not substantially adversely affected even when the throttle valve 4 is opened more than 50 degrees. On the other hand, dotted line in FIG. 15 shows the relationship between the valve opening and the intake flow rate in the case where the diesel engine is in such a running status that a required intake flow rate is secured when the throttle valve is opened to 30 degrees or in a low- speed running status. The required intake flow rate is thus secured when the valve opening is 30 degrees, and the intake flow rate is not substantially increased such that the diesel engine is not substantially adversely affected even when the throttle valve 4 is opened more than 30 degrees. In the former case, even when the throttle valve 4 is opened and closed in the-opening range of 50 to 80 degrees, the intake flow rate is not substantially varied such that the diesel engine is not substantially adversely affected. In the latter case, even when the throttle valve 4 is opened and closed in the opening range of 30 to 80 degrees, the intake flow rate is not substantially varied such that the diesel engine is not substantially adversely affected. More specifically, the opening range of the throttle valve not adversely affecting the current running status of the diesel engine is wide when the engine speed is low, whereas the opening range of the throttle valve not adversely affecting the current running status is narrow when the engine speed becomes high. In either running status, the opening range of 70 to 80 degrees is an allowable range not adversely affecting the running of the engine. Thus, the opening of the throttle valve can be set in the range of 70 to 80 degrees without adversely affecting the current running status no matter when the diesel engine is in the high-speed or low-speed condition. The above-described opening range of 70 to 80 degrees is the high opening range H of the throttle valve 4 in the present invention.

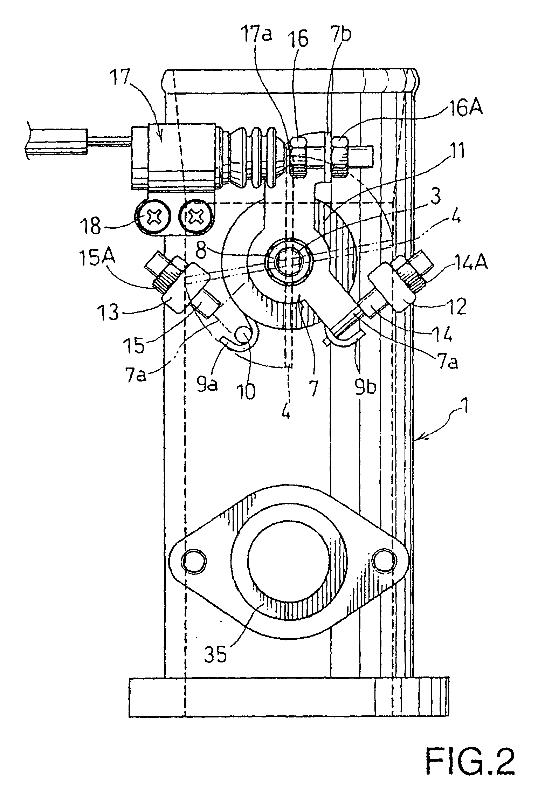

Referring to FIGS. 1 and 2, a first lever 7 is fixed to the left-hand end of the throttle shaft 3 by a nut 8. The first lever 7 has on its outer periphery an engaging piece 7a and a mounting piece 7b. The engaging piece 7a has a distal end bent toward the main body 1 (to the right as viewed in FIG. 1). The mounting piece 7b has a distal end bent in the direction opposite the distal end of the engaging piece 7a (to the left as viewed in FIG. 1).

Further referring to FIG. 1, a first spring 9 comprising a coil spring is fitted with the left-hand boss 1a of the main body 1 prior to assembly of the first lever 7 to the throttle shaft 3. One spring hook 9a of the first spring 9 is engaged with a spring stopper pin 10 mounted on the left-hand side face of the main body 1. The other spring hook 9b of the first spring 9 is engaged with the engaging piece 7a of the first lever 7. The first spring 9 urges the first lever 7 in a direction in which the throttle valve is opened (hereinafter, "valve opening direction") or counterclockwise as viewed in FIG. 2 relative to the main body 1. A spring guide 11 is rotatably fitted with the throttle shaft 3 so as to be located between the first lever 7 and the first spring 9.

Referring to FIG. 2, two front and rear mounting protrusions 12 and 13 are provided on the shown side face of the main body 1 with the engaging piece 7a of the first lever 7 being positioned therebetween. A full open stopper screw 14 is threaded into the front mounting protrusion 12 to be locked by a lock nut 14A. The full opening stopper screw 14 is abutted against the engaging piece 7a of the first lever 7 shown by solid line in FIG. 2 so that the throttle valve 4 is stopped at a valve opening limit position as shown by dotted line in FIG. 2, thereby preventing further rotation of the first lever 7 in the valve opening direction or counterclockwise as viewed in FIG. 2.

A full closing stopper screw 15 is threaded into the rear mounting protrusion 13 to be locked by a lock nut 15A. The full closing stopper screw 15 is abutted against the engaging piece 7a of the first lever 7 as shown by two-dot chain line in FIG. 2 so that the throttle valve 4 is stopped at a valve closing limit position, thereby preventing further rotation of the first lever 7 in a direction in which the throttle valve is closed (hereinafter, "valve closing direction") or clockwise as viewed in FIG. 2. Each of the stopper screws 14 and 15 can be threaded forward and backward so that the location of abutment against the engaging piece 7a is adjusted.

Further referring to FIG. 2, a switch pressing screw 16 comprising a bolt is threaded into the distal end of the mounting piece 7b of the first lever 7 to be locked by a lock nut 16A. A full opening position detecting switch 17 or full open switch is mounted on the left-hand side face of the main body 1 by locking screws 18 so as to be located in front of the switch pressing screw 16 in the valve opening direction. The full open switch 17 includes a detecting end 17a pressed by a head of the switch pressing screw 16 when the throttle valve 4 is opened to the full opening position. The full opening switch 17 is turned on when its detecting end 17a is pressed by the head of the switch pressing screw 16 and turned off when its detecting end 17a is released from pressing, thereby delivering a detection signal or output signal to an engine control computer (ECU) 20 as shown in FIG. 1. The switch pressing screw 16 can be threaded forward and backward so that the location of abutment against the detecting end 17a of the full opening switch 17 is adjusted.

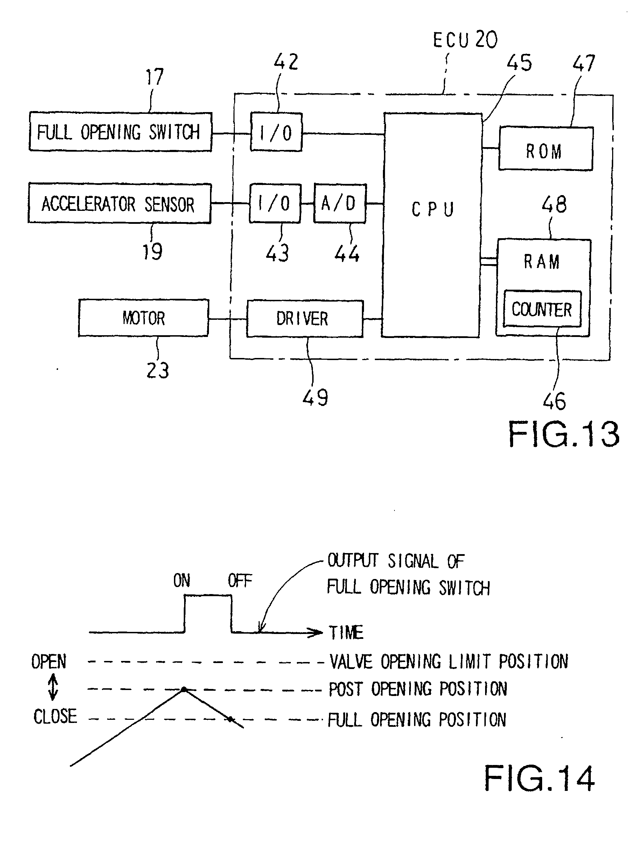

FIG. 14 is a timing chart showing the relationship between the output signal delivered by the full opening switch 17 and the throttle opening. The full opening switch 17 is turned on at a time as the throttle valve 4 is opened. The full opening switch 17 is turned off when the throttle valve 4 is closed at the turn-on time and a predetermined amount of closure is reached. This is due to hysteresis in the full opening switch 17. For simplification of the description, the time the full opening switch 17 is turned on is referred to as "post-opening position," and the time the full opening switch 17 is subsequently turned off is referred to as "full opening position." In order that the variations in the switching position of the full opening switch 17 are absorbed, the valve opening limit position of the throttle valve 4 is set so that the throttle valve is opened to a larger extent than at the post-opening position.

Returning to FIG. 1, ECU 20 receives information from the full opening switch 17, various sensors and switches (not shown) to perform operations, thereby delivering drive signals to a step motor 23 and negative pressure control valve 40 of an EGR valve 33 according to accelerator manipulation and running status of the engine as will be described later.

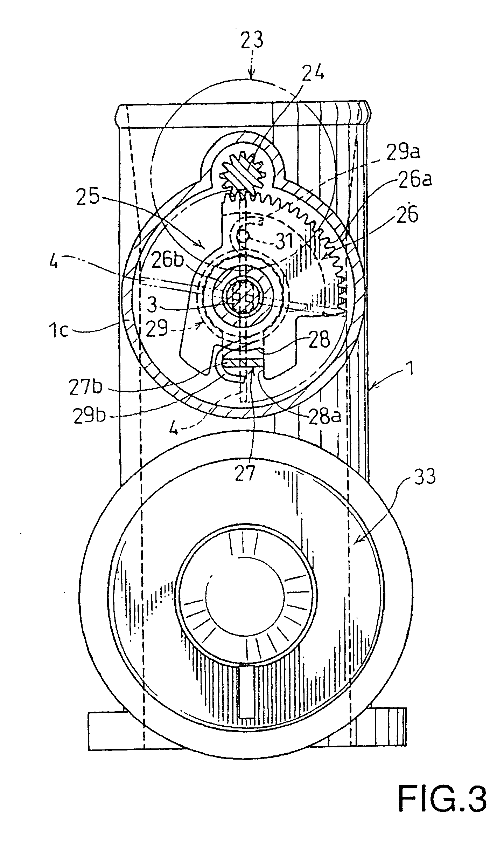

A cover plate 22 is fixed to the housing 1c of the main body 1 so as to cover an open end thereof. The step motor 23 which will sometimes be referred to as "motor" hereinafter is mounted on the cover plate 22 with an output shaft 23a thereof projecting into the housing 1c. A pinion 24 is mounted on a distal end of the output shaft 23a of the motor 23. A power transmission 25 is provided on the right- hand end of the throttle shaft 3 for transmitting power between the motor 23 and the throttle shaft 3, as viewed in FIG. 1. FIG. 3 is a sectional view taken along line III-III in FIG. 1. The power transmission 25 comprises a sector gear 26 serving as a driving side connecting member and a second lever 27 serving as a driven side connecting member.

The sector gear 26 has an outer peripheral gear section 26a and a boss 26b defining a central shaft hole. The second lever 27 is formed generally into a U-shape as shown in FIG. 1 and has both ends 27a, 27a facing ends faces 26c, 26c of the sector gear 26 and having mounting holes, respectively and a connecting section 27b connecting the ends 27a, 27a together. The sector gear 26 is disposed between the ends 27a, 27a of the second lever 27 and then, the throttle shaft 3 is inserted through the mounting holes of the lever 27 and the shaft hole of the boss 26b of the sector gear 26. The second lever 27 is nonrotatably fixed to the throttle shaft 3 by a nut 21. The sector gear 26 is mounted on the throttle shaft 3 to be rotatable and prevented from falling off by the second lever 27. A suitable bearing is interposed between the boss 26b of the sector gear 26 and the throttle shaft 3. Washers are interposed between the ends 27a, 27a of the second lever 27 and the boss 26b of the sector gear 26 respectively.

The gear section 26a of the sector gear 26 is in mesh engagement with the pinion 24 mounted on the output shaft 23a of the motor 23. The sector gear 26 has a concave engagement groove 28 formed in a peripheral portion substantially opposed to the gear section 26a. The connecting section 27b of the second lever 27 is inserted in the engagement groove 28 with a space therebetween so that the connecting section 27b is rotatable in a predetermined angular range relative to the engagement groove 28.

A second spring 29 comprising a coil spring is provided around the boss 26b of the sector gear 26 with a pair of spring guides 30 interposed therebetween prior to the mounting of the second lever 27 on the throttle shaft 3. One spring hook 29a of the second spring 29 is engaged with a spring stopper pin 31 mounted on a side face of the sector gear 26, whereas the other spring hook 29b of the second spring 29 is engaged with the connecting section 27b of the second lever 27. The second spring 29 urges the sector gear 26 in the valve opening direction or clockwise as viewed in FIG.3 and further urges the second lever 27 in the valve closing direction or counterclockwise as viewed in FIG.3. An urging force of the second spring 29 is set to be larger than that of the first spring 9 and smaller than a torque of the sector gear 26 driven by the motor 23. Accordingly, the urging force of the second spring 29 normally holds the connecting section 27b of the second lever 27 abutted against a valve closing side groove wall 28a of the engagement groove 28 of the sector gear 26. This state is referred to as "P state" of the power transmission 25.

As shown in FIG. 1, the EGR valve 33 of an exhaust gas recirculation system for EGR control (referred to as "EGR control system") is provided on the main body 1 at the downstream side of the throttle valve 4. The EGR valve 33 is provided with a valve element 36 for opening and closing a valve seat 35 disposed at one end of an EGR gas passage 34 communicating with the intake passage 2. The valve element 36 is closed when a negative pressure introduced into a negative pressure chamber 38 defined by a diaphragm 37 is smaller than an urging force exerted by a diaphragm spring 39 or when an absolute pressure is high in the negative pressure chamber 38. The valve element 36 is opened when the negative pressure in the chamber 38 is larger than the urging force of the diaphragm spring 39 or when the absolute pressure is low in the negative pressure chamber 38. The negative pressure control valve 40 is switched so that the negative pressure chamber 38 communicates either with an atmosphere or with a negative pressure source.

The negative pressure control valve 40 is switched on the basis of the output signal delivered by ECU 20. More specifically, determining that the introduction of EGR gas is unnecessary, ECU 20 switches the negative pressure control valve 40 so that the negative pressure chamber 38 communicates with the atmosphere. Consequently, since the negative pressure is not introduced into the negative pressure chamber 38, the valve element, 36 is closed by the urging force of the diaphragm spring 39, whereby the EGR gas passage 34 is cut off from the intake passage 2. On the other hand, determining that the EGR gas needs to be introduced into the negative pressure chamber 38, ECU 20 switches the negative pressure control valve 40 so that the negative pressure chamber 38 communicates with the negative pressure source, whereby the negative pressure is introduced from the negative pressure source into the negative pressure chamber 38. Consequently, since the negative pressure acting on the diaphragm 37 opens the valve element 36, the EGR gas passage 34 communicates with the intake passage 2. When the pressure of the EGR gas is higher than that of intake air flowing through the intake passage 2, the EGR gas is caused to flow into the intake passage 2 to be mixed with intake air into gaseous mixture which is further caused to flow into the engine. Furthermore, when a large quantity of EGR gas is desired to quickly flow into the engine, the throttle valve 4 is closed so that the pressure of the intake air flowing through the intake passage 2 is reduced.

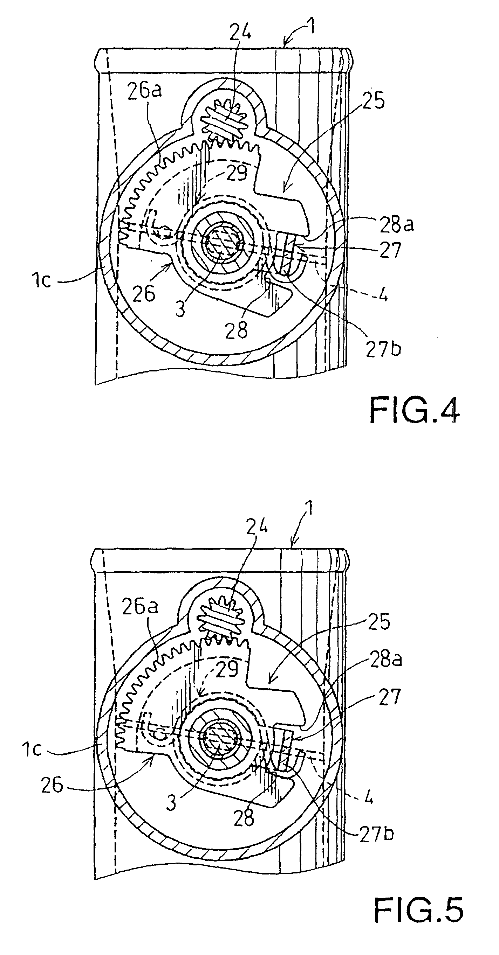

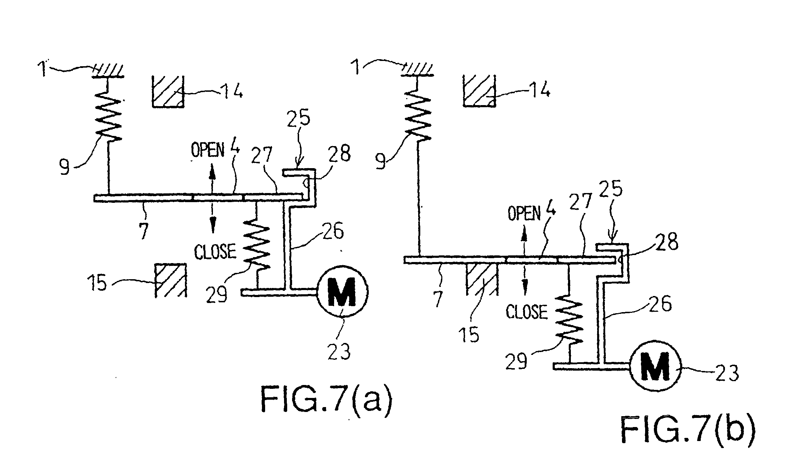

In the normal condition of the above-described intake throttle apparatus except the time of engine stop, the sector gear 26 and second lever 27 of the power transmission 25 are held by the urging force of the second spring 29 in the P state wherein the connecting section 27b of the second lever 27 is in abutment with the valve closing side groove wall 28a of the engagement groove 28 of the sector gear 26. See FIGS. 3 and 4. FIG. 7(a) schematically illustrates this state. The step motor 23 is operated in this state so that a produced drive force is transmitted from the pinion 24 of the output shaft 23a via the sector gear 26 in the P state and second lever 27 to the throttle shaft 3, whereupon the throttle valve 4 is opened and closed by a predetermined opening. The opening of the throttle valve 4 is adjusted by the motor 23 controlled by ECU 20 within the normal operating range (between lines 4f and 4i in FIG. 6) according to the running status of the engine as in the known intake throttle apparatus when the accelerator is on. The throttle valve 4 occupies the half-opening position (shown by line 4i in FIG. 6) in the no-load running of the engine when the accelerator is off. The throttle valve 4 occupies the full closing position (shown by line 4s in FIG. 6) in the engine stop.

The step motor 23 is operated to close the throttle valve 4 when the engine is stopped in the above-described normal condition. The engaging piece 7a of the first lever 7 is finally abutted against the full closing stopper screw 15 (two-dot chain line in FIG. 2), whereby the throttle valve 4 is stopped at the full opening position as shown in FIG. 4. If the number of steps of the step motor 23 counted by the computer or ECU 20 is equal to the actual number, ECU 20 can stop the step motor 23 when the throttle valve 4 occupies the full closing position. However, if the number of steps counted by ECU 20 differs from the actual number, the rotation of the step motor 23 is continued even after the throttle valve 4 has been abutted against the full closing stopper screw 15 to be stopped. When the motor 23 continues rotating in the valve closing direction even after stop of the throttle valve 4, the sector gear 26 is rotated in the valve closing direction against the urging force of the second spring 29 (see FIG. 5), whereas the second lever 27 maintains the stopped state at the full closing position as the result of abutment of the engaging piece 7a of the first lever 7 against the full closing stopper screw 15. Consequently, the power transmission 25 is released from the P state. This condition is referred to as "relief state" and is shown in FIG. 7(b) and in FIG. 5.

Only the step motor 23 is adapted to continue rotating even after the throttle valve 4 has been stopped at the full closing position, as described above. Consequently, the throttle valve 4 can reliably be closed at the full closing position, and the loss of synchronism of the step motor 23 can be prevented. Furthermore, when the throttle valve 4 is bounded in the valve opening direction as the result of the collision of the engaging piece 7a of the first lever 7 against the full closing stopper screw 15, the second lever 27 is temporarily rotated in the valve opening direction against the urging force of the second spring 29, whereupon the throttle valve 4 can be allowed to bound without occurrence of loss of synchronism of the motor 23. The urging force of the second spring 29 returns the power transmission 25 from the relief state to the P state (see FIG. 4) when the motor 23 is turned off after completion of the closing operation.

The urging force of the first spring 9 is set to be smaller than a stop torque (a force resisting against opening and closing of the throttle valve 4) obtained by amplifying the detent torque of the motor 23 in a ratio of the number of teeth of the pinion 24 and that of the sector gear 26. Furthermore, the urging force of the first spring 9 is set to be larger than a torque produced by a flow of intake air flowing through the intake passage to act to close the throttle valve 4. The intake flow torque acting to close the throttle valve 4 varies depending upon the speed of the air flow and the opening degree of the throttle valve 4. The urging force of the first spring 9 is set to be larger than the maximum intake flow torque acting to close the throttle valve 4. The reason for this is that when the urging force of the first spring 9 is smaller than the maximum intake flow torque acting to close the throttle valve 4, the intake flow torque acting to close the throttle valve 4 is rendered larger or smaller than the urging force of the first spring 9. With the variations in the intake flow torque, a direction of tooth bearing of the gear meshing (24, 26a) is changed so that a backlash of the gear meshing varies the opening of the throttle valve 4. This results in a problem of reduction in the control accuracy. The urging force of the first spring 9 is set to be larger than the maximum intake flow torque so that the above- described problem is solved.

FIG. 13 illustrates a block diagram of the control computer (ECU) 20. ECU 20 is constituted into a microcomputer system mainly comprising CPU 45, ROM 47 and RAM 48. An accelerator sensor 19 for sensing a quantity of actuation of an accelerator pedal by a driver delivers an output signal to CPU 45 via an I/O interface 43 and an A/D converter 44. The full opening switch 17 delivers the ON/OFF signal to CPU 45 via the I/O interface 43. A part of RAM 48 serves as a motor counter 46 for counting the steps of the step motor 23. Based on the output signal of the accelerator sensor 19, ECU 20 performs operations with the count of the motor counter 46 as a converted value according to the opening of the throttle valve 4, thereby delivering an output signal to a drive circuit 49 for driving the motor 23 so that the number of steps of the motor 23 agrees with the converted value. The count (the number of steps) of the motor counter 46 is set at zero when the throttle valve 4 is at the full opening position. The number of steps corresponding to the opening of the throttle valve 4 in the valve closing direction is added on the basis of zero.

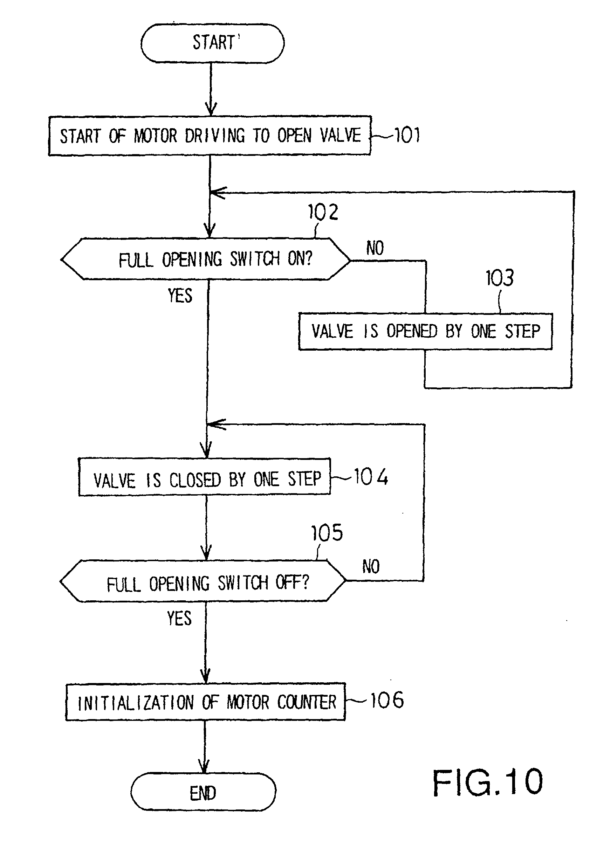

FIGS. 10 to 12 are flowcharts showing the processing procedure of CPU 45 in accordance with a program stored in ROM 47. Referring first to FIG. 10, which describes a procedure not according to the invention, the processing for confirming the throttle valve 4 occupying the full opening position at the starting of the engine will be described. The processing starts upon turn-on of an engine ignition switch. First, the step motor 23 is energized so that the throttle valve 4 is opened at step 101. CPU 45 determines whether the full opening switch 17 is on at step 102. The throttle valve 4 is opened by one step when the full opening switch 17 is not on, at step 103. When the full opening switch 17 is turned on, the throttle valve 4 is then closed by one step at step 104. CPU 45 then determines whether the full opening switch 17 is off at step 105. When the full opening switch 17 is not off, CPU 45 returns to step 104 to close the throttle valve 4 by one step. When the full opening switch 17 is turned off, CPU 45 determines that the throttle valve 4 occupies the full opening position (to be exact, the full opening position described with reference to FIG. 14), advancing to step 106 where the motor counter 46 of RAM 48 is initialized.

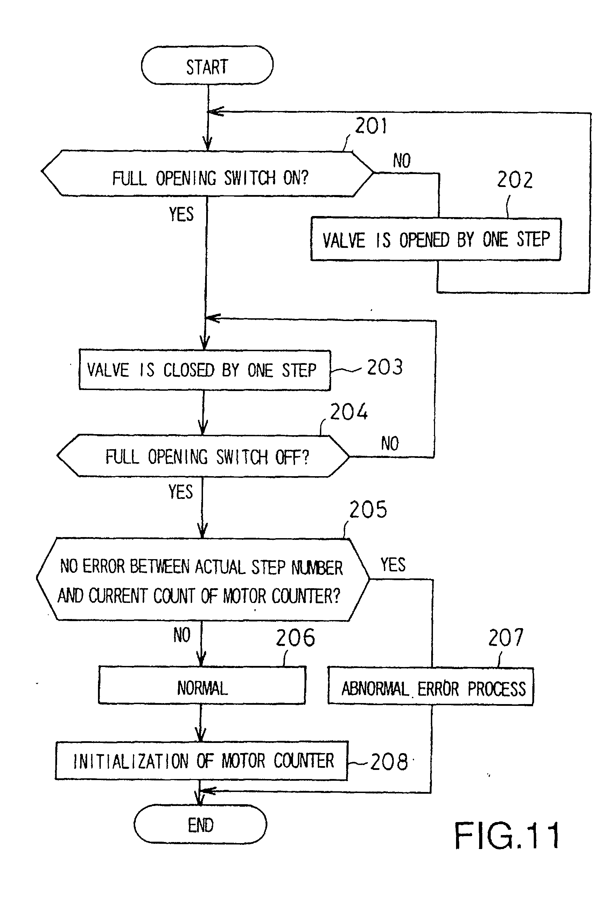

Referring to FIG. 11, the processing for initializing the motor counter 46 by moving the throttle valve 4 to the full opening position during running of the engine will be described. This processing is performed when the current running status of the engine can be maintained even if the throttle valve 4 is opened to occupy the full opening position during running of the engine. For example, a map is previously made recording the openings of the throttle valve according to engine speeds and fuel oil consumption of the diesel engine. When the actual opening of the throttle valve is larger than the one read out from the map, the current running status can be continued even when the throttle valve 4 is opened to the full opening position. The above-described condition is met in a lot of cases during the normal running except for the case where the throttle valve 4 is closed so that a large quantity of EGR gas is caused to flow to the engine.

CPU 45 determines whether the full opening switch 17 is on at step 201. The throttle valve 4 is opened by one step when the full opening switch 17 is not on, at step 202. When the full opening switch 17 is turned on, then the throttle valve 4 is closed by one step at step 203. CPU 45 then determines whether the full opening switch 17 is off at step 204. When the full opening switch 17 is not off, CPU 45 returns to step 203 to close the throttle valve 4 by one step. When the full opening switch 17 is turned off, CPU 45 determines that the throttle valve 4 occupies the full opening position. CPU 45 then advances to step 205 to determine, on the basis of the signal from the full opening switch 17 and the current count of the motor counter 46, whether there is no error between the actual number of steps of the motor 23 and the current count of the motor counter 46. When the error is within a tolerance, CPU 45 determines that the system is normal and the control may be continued, advancing to step 206. At step 208, the motor counter 46 of RAM 48 is initialized. If the error is beyond the tolerance, CPU 45 determines that the error is abnormal, advancing to step 207 to take necessary process for coping with the abnormal condition. For example, the process taken at step 207 includes:
1. deenergizing motor 23 and interrupting the control;
2. restarting the control from initial checking; and
3. continuing the control until the determination of abnormal error is made at a predetermined number of times and performing the processing 1 or 2 when the determination is made at a predetermined number of times.

Furthermore, an indicator (not shown) may be actuated to inform the driver of failure.

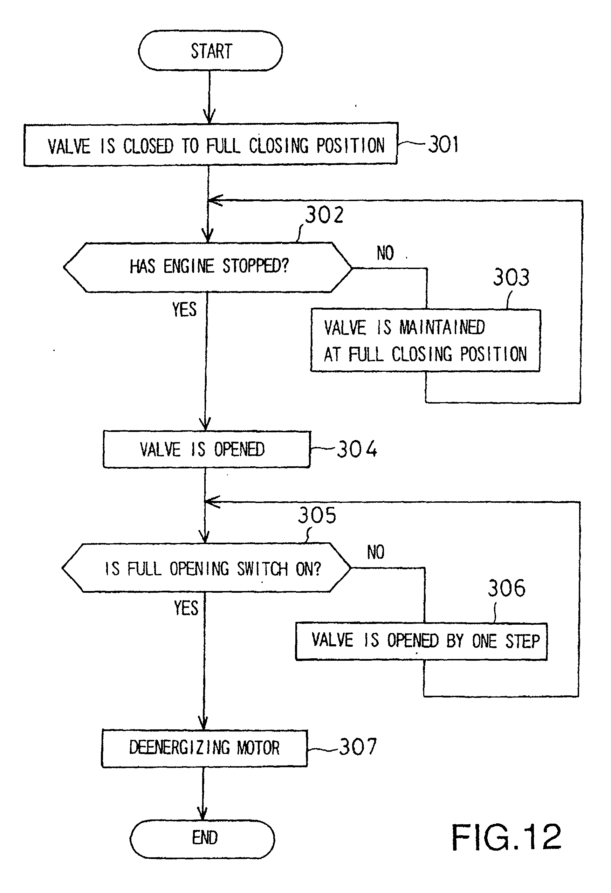

Referring to FIG. 12, the processing for determining that the throttle valve 4 occupies the full opening position at the time of engine stop will be described. This processing starts upon turn-off of the engine ignition switch. First, the throttle valve 4 in a relief region (idle position) is closed to occupy the full closing position 4s (see FIG. 6) at step 301. CPU 45 then determines whether the engine has stopped at step 302. The throttle valve 4 is maintained at the current position at step 303 when the engine has not stopped. When the engine has stopped, the throttle valve 4 is opened at step 304. CPU 45 then determines whether the full opening switch 17 is on at step 305. The throttle valve 4 is opened by one step at step 306 when the full opening switch 71 is not on. When the full opening switch 71 is turned on, CPU 45 determines that the throttle valve 4 occupies the full opening position, advancing to step 307 to deenergize the motor 23. The control computer (ECU) 20 serves as a step motor control system. Each of steps 106 and 208 corresponds to the processing for initializing the number of steps. Step 207 corresponds to the processing for taking the necessary process for coping with the abnormal condition.

According to the above-described embodiment, the reference position is provided at the full opening position within the high opening range which does not have a large effect on the intake flow rate of the engine. Accordingly, a lot of opportunities occur to adjust the throttle valve to the reference position without having a large effect on the running of the engine. Consequently, the processing for initializing the number of steps can be performed at a high frequency.

The full opening switch 17 delivers the signal to ECU 20 when the throttle valve 4 occupies the full opening position within the high opening range in which the intake flow rate is not substantially varied. Based on the signal from the full opening switch 17, ECU 20 performs the processing for initializing the number of steps of the step motor 23 with the full opening position of the throttle valve serving as the reference position (see step 208 in FIG. 11), whereupon the throttle opening can correspond to the number of steps. Furthermore, when the required intake flow rate is secured, for example, when the engine is outside the EGR control area or when the EGR rate is secured even where the engine is within the EGR control area, the intake flow rate does not substantially vary even if the throttle valve 4 is opened and closed in an opening range (range X in FIG. 15) exceeding the required intake flow rate. Since this does not substantially interfere with the running of the diesel engine, the throttle valve 4 can be controlled to occupy the full opening position within the high opening range (range H in FIG. 15). Accordingly, the number of opportunities to be able to control the throttle valve 4 to be within the high opening range H is increased when the processing for initializing the number of steps of the step motor 23 is performed while the throttle valve occupies the full opening position within the high opening range H. As a result, the processing for initializing the number of steps can frequently be performed. Consequently, even when the loss of synchronism of the step motor occurs during the normal running of the diesel engine, the step number initializing processing can immediately be performed, whereupon the disagreement can be prevented between the number of steps counted by the computer and the actual throttle opening.

Furthermore, the position detecting means detects the full opening position of the throttle valve 4 as the reference position. Accordingly, the position detecting means does not require a large detecting stroke such as in the case where an intermediate position of the throttle valve 4 is detected as the reference position nor a specific construction. Thus, a general purpose low-cost switch having a small detecting stroke can be used as the position detecting means. Although the position detected by the position detecting means, that is, the reference position is the full opening position in the foregoing embodiment, it may be set at any position within the high opening range H. A switch or sensor according to the reference position may be employed as the position detecting means. In this case, the processing for initializing the number of steps is performed according to the position detected by the position detecting means.

ECU 20 drives the step motor 23 so that the throttle valve 4 occupies the full opening position when the throttle valve is opened to the opening satisfying the intake flow rate required by the respective engine speeds of the diesel engine, whereupon the throttle valve occupies the reference position. Consequently, the processing for initializing the number of steps performed by ECU 20 can frequently be executed. Alternatively, the above-described drive of the step motor 23 may be executed by ECU 20 once at a plurality of times when the throttle valve 4 is opened to the opening satisfying the intake flow rate required for the diesel engine or at predetermined intervals.

The condition for controlling the throttle valve 4 into the detecting position or the reference position should not be limited to that the throttle valve is opened into the opening satisfying the intake flow rate required for the diesel engine. Any condition may be employed that allows the continuous running of the diesel engine even after the throttle valve 4 is controlled to occupy the reference position.

ECU 20 performs the processing for taking the necessary measures for coping with the abnormal condition when the error between the reference position of the throttle valve 4 and the current step position of the motor 23 is beyond the tolerance. Consequently, the safety can be improved and execution of useless processing for initializing the number of steps in the abnormal condition can be avoided.

The motor 23 is deenergized when the throttle valve 4 occupies the post-opening position in the case where the engine is stopped. As a result, the throttle valve 4 can quickly be initialized at a subsequent starting of the engine. Furthermore, deenergization of the motor 23 at the full opening position results in deposit, for example. However, since the motor 23 is deenergized when the throttle valve occupies the post-opening position, the throttle valve can be prevented from being secured to the bore by the deposit. Additionally, when the motor 23 is deenergized with the throttle valve 4 occupying the full opening or half-opening position, the motor 23 disadvantageously needs to be driven so that the throttle valve occupies the full opening position for securement of the required quantity of intake air at the starting of the engine. However, this disadvantage can be overcome by deenergizing the motor 23 when the throttle valve 4 occupies the post-opening position at the time of stop of the engine.

### Second embodiment:

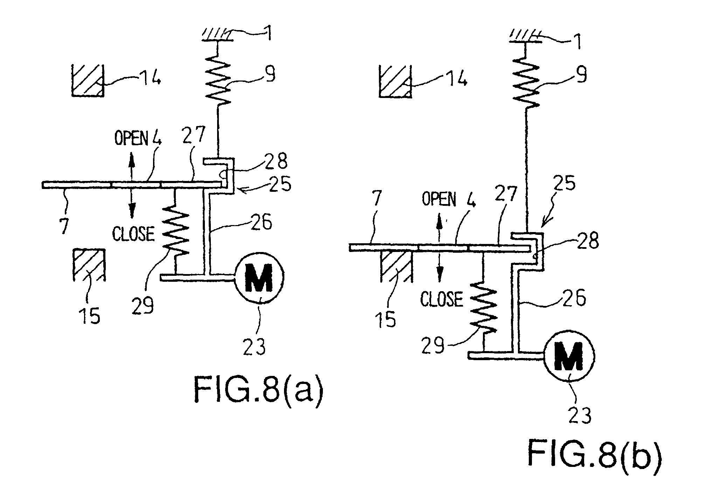

FIGS. 8(a) and 8(b) illustrate a second embodiment of the invention. FIG. 8(a) shows the P state of the power transmission 25 and FIG. 8(b) shows the relief state of the power transmission 25. Only the differences between the first and second embodiments will be described. The identical or substantially identical parts are labeled by the same reference symbols in the second embodiment as in the first embodiment and the description of these parts will be eliminated.

The first spring 9 is disposed between the first lever 7 and the main body 1 in the first embodiment. In the second embodiment, however, the first spring 9 is disposed between the sector gear 26 and the main body 1 to urge the sector gear in the valve opening direction.

### Third embodiment:

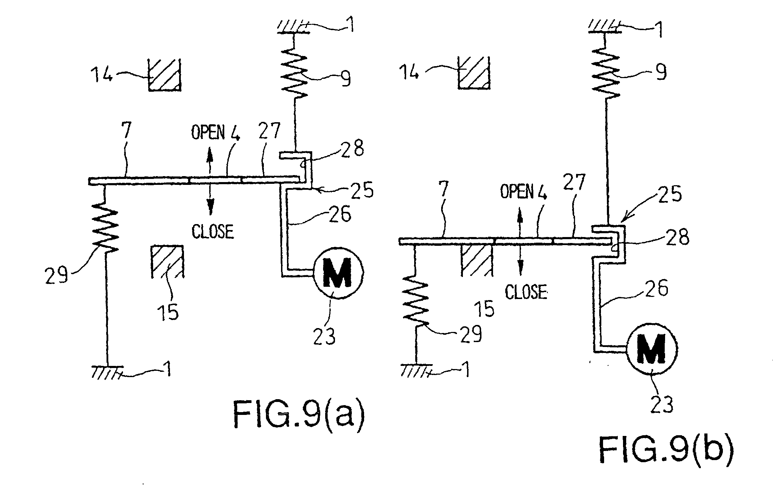

FIGS. 9(a) and 9(b) illustrate a third embodiment of the invention. FIG. 9(a) shows the P state of the power transmission 25 and FIG. 9(b) shows the relief state of the power transmission 25. Although the second spring 29 is disposed between the second lever 27 and the sector gear 26 in the first embodiment, it is disposed between the first lever 7 and the main body 1 to urge the first lever 7 in the valve closing direction. The urging force of the first spring 9 is set to be larger than that of the second spring 29.

### Fourth embodiment:

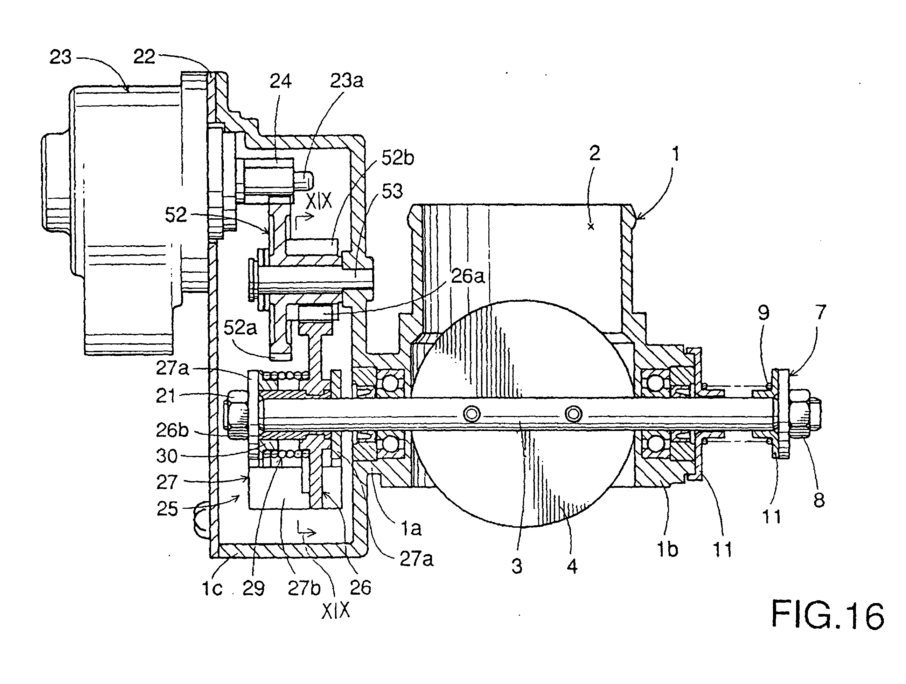

FIGS. 16 to 19 illustrate a fourth embodiment of the invention. The full opening switch 17 is accommodated in the housing 1c of the main body 1. The components are arranged inversely right and left with respect to the first embodiment. A part of the components differ from those in the first embodiment. Some components have shapes different from those in the first embodiment. The main body 1 is formed into a discrete member with respect to the exhaust gas recirculation system including the EGR valve 33.

Referring to FIG. 16, the housing 1c is formed on the left-hand boss 1a of the main body 1. The first spring 9 is provided around the portion of the throttle shaft 3 between the right-hand boss 1b and the lever 7 mounted on the throttle shaft 3 with the left-hand and right-hand spring guides 11 being interposed therebetween respectively.

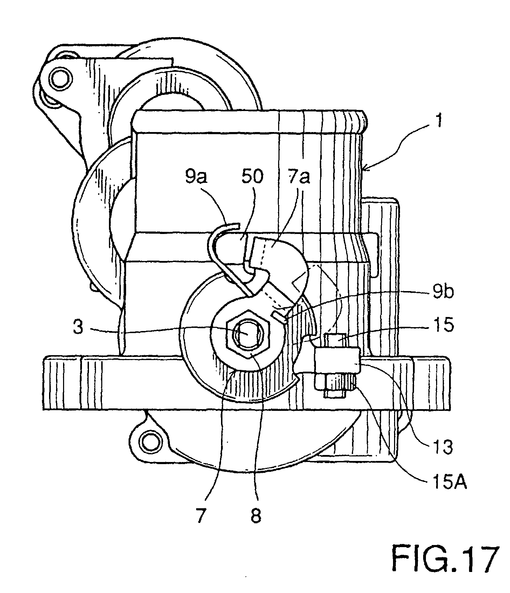

Referring to FIG. 17, the first lever 7 fixed to the throttle shaft 3 has only the engaging piece 7a. One spring hook 9a of the first spring 9 is engaged with a spring stopper protrusion 50 formed on the right-hand side wall of the main body 1. The other spring hook 9b of the first spring 9 is engaged with the engaging piece 7a of the first lever 7. The spring stopper protrusion 50 is allowed to abut against the engaging piece 7a when the throttle valve 4 occupies the valve opening limit position. The spring stopper protrusion 50 thus has the function performed by the full opening stopper screw 14 in the first embodiment. The full closing stopper screw 15 is threaded into the mounting protrusion 13 to be locked by the lock nut 15A.

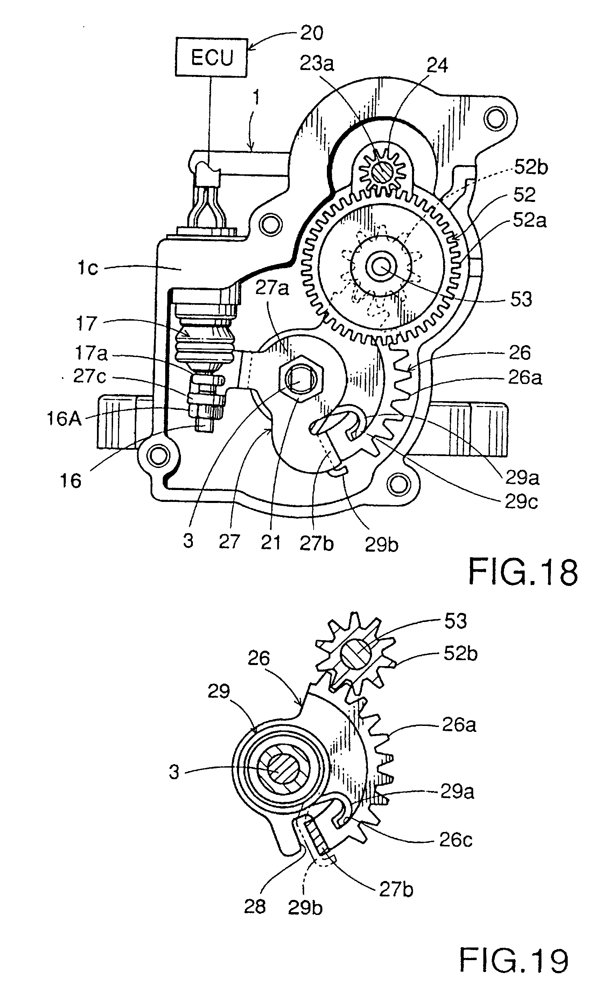

Referring to FIGS. 16 and 18, an intermediate reduction gear 52 is interposed between the pinion 24 mounted on the output shaft 23a of the step motor 23 and the gear section 26a of the sector gear 26. The intermediate gear 52 is rotatably mounted on a support shaft 53 secured to the main body 1a. The intermediate gear 52 has large diameter gear 52a and a small diameter gear 52b. The large diameter gear 52a of the intermediate gear 52 is in mesh engagement with the pinion 24 of the step motor 23. The small diameter gear 52b is in mesh engagement with the gear section 26a of the sector gear 26. FIG. 19 is a sectional view of the intake throttle apparatus taken along line XIX-XIX in FIG. 16. A driving force of the step motor 23 is transmitted via the intermediate gear 52 to the sector gear 26 of the power transmission 25. The spring hook 29a of the second spring 29 is engaged with a spring stopper groove 26c formed in an end face of the sector gear 26, as shown in FIG. 19. The spring stopper groove 26c is provided instead of the spring stopper pin 31 in the first embodiment.

Referring to FIG. 18, a mounting piece 27c is provided on the outer periphery of an outer end 27a of the second lever 27. The switch presser screw 16 is threaded into a distal end of the mounting piece 27c to be locked by a lock nut 16A. The full opening switch 17 is mounted on the side wall of the housing 1c of the main body 1 so as to be accommodated in the housing. The full opening switch 17 is positioned forward in the valve opening direction of the switch presser screw 16.

The first lever 7 and second lever 27 both fixed to the throttle shaft 3 are integrally actuated in the fourth embodiment. Accordingly, the mounting piece 7b of the first lever 7 is provided on the second lever 27. The full opening switch 17 is accommodated in the housing 1c of the main body 1. The intake throttle apparatus of the fourth embodiment operates substantially in the same manner as in the first embodiment and accordingly, the description of the operation will be eliminated.

Substantially the same effect can be achieved in the fourth embodiment as in the first embodiment. In the fourth embodiment, particularly, the full opening switch 17 is accommodated in the housing 1c of the main body 1. This construction is advantageous in ensuring waterproof and dustproof for the full opening switch 17. Accordingly, the full opening switch 17 and the switch presser screw 16 can be protected from the collision with the other members in assembly of the intake throttle apparatus and from the collision of stepping stones therewith. Consequently, the construction of the fourth embodiment is advantageous in improvement of the reliability of the apparatus and prevention of errors in adjustment.

The present invention should not be limited to the foregoing embodiments and can be modified as follows, for example. The turn-off time of the full opening switch 17 may be set as the reference position. The urging force of the first spring 9 in the first embodiment may be set to be larger than a stop torque of the sector gear 26 due to the detent torque of the motor 23. In this case, the throttle valve 4 can be held at the valve opening limit position by the urging force of the spring 9 when the motor 23 is in the deenergized state.

According to the intake throttle apparatus for the diesel engine in accordance with the present invention, the disagreement due to the loss of synchronism of the step motor in the normal running of the diesel engine etc. can be prevented between the throttle opening and the number of steps of the step motor.

## Claims

1. An intake throttle apparatus installed in a diesel engine comprising:
a throttle valve (4) opening and closing an intake passage of the diesel engine;
a step motor (23) for opening and closing the throttle valve;
reference position detecting means (17) for detecting the throttle valve occupying a reference position provided within a high opening range of the throttle valve, thereby delivering a reference position signal;
reference position returning means (19, 20) determining that the running diesel engine is in such a state that the running status thereof can be maintained when the throttle valve occupies the reference position, and actuating the step motor so that the throttle valve occupies the reference position; and
means (45,46) supplied with the reference position signal during operation of the reference position returning means for initialising the number of steps of the step motor.

2. An intake throttle apparatus according to claim 1, wherein the reference position is a full opening position of the throttle valve (4).

3. An intake throttle apparatus according to claim 1 or 2, wherein an operation of the reference position returning means is started on the basis of the diesel engine speed and an opening degree of the throttle valve (4).

4. An intake throttle apparatus according to any of claim 1 to 3, further comprising means for performing a processing for coping with an abnormal condition in a case where the number of steps of the step motor is outside an allowable range when the reference position signal is supplied to the initialising means.

5. An intake throttle apparatus according to claim 2, wherein the reference position signal is delivered when the reference position detecting means (17) provided at the full opening position of the throttle valve is turned on and thereafter, turned off, by
determining whether the detecting means (17) is activated (step 102; 201),
actuating the step motor (23) by a step as to move the throttle valve towards the full opening position in case the detecting means is not activated (step 103; 202),
actuating the step motor by a step as to move the throttle valve towards in its closing direction in case the detecting means is activated (step 104; 203; 105; 204) and
delivering said reference signal in case it is determined that the detecting means is deactivated (step 106; 208).

## Patentansprüche

1. Ansaugluftdrosselvorrichtung, eingebaut in einen Dieselmotor, enthaltend:
ein Drosselventil (4), das einen Ansaugdurchlaß des Dieselmotors öffnet und schließt;
einen Schrittmotor (23) zum Öffnen und Schließen des Drosselventils;
eine Bezugspositionserfassungseinrichtung (17) zum Erfassen, dass das Drosselventil eine Bezugsposition einnimmt, die innerhalb eines Bereiches großer Öffnung des Drosselventils vorgesehen ist, wodurch ein Bezugspositionssignal geliefert wird;
eine Bezugspositionsrückkehreinrichtung (19, 20), die feststellt, dass der laufende Dieselmotor in einem solchen Zustand ist, dass sein Laufzustand aufrechterhalten werden kann, wenn das Drosselventil die Bezugsposition einnimmt, und die den Schrittmotor derart betätigt, dass das Drosselventil die Bezugsposition einnimmt; und
eine Einrichtung (45, 46), der während des Betriebes der Bezugspositionsrückkehreinrichtung das Bezugspositionssignal zugeführt wird, zum Initialisieren der Anzahl der Schritte des Schrittmotors.

2. Ansaugluftdrosselvorrichtung nach Anspruch 1, wobei die Bezugsposition eine voll geöffnete Position des Drosselventils (4) ist.

3. Ansaugluftdrosselvorrichtung nach Anspruch 1 oder 2, wobei ein Betrieb der Bezugspositionsrückkehreinrichtung auf Basis der Drehzahl des Dieselmotors und eines Öffnungsgrades des Drosselventils (4) beginnt.

4. Ansaugluftdrosselvorrichtung nach einem der Ansprüche 1 bis 3, weiter enthaltend eine Einrichtung zum Durchführen eines Verfahrens bei einem unnormalen Zustand in einem Fall, in dem die Anzahl der Schritte des Schrittmotors außerhalb eines erlaubten Bereiches liegt, wenn das Bezugspositionssignal der Initialisierungseinrichtung zugeführt wird.

5. Ansaugluftdrosselvorrichtung nach Anspruch 2, wobei das Bezugspositionssignal geliefert wird, wenn die an der voll geöffneten Position des Drosselventils vorgesehene Bezugspositionserfassungseinrichtung (17) angeschaltet und danach abgeschaltet wird, indem
festgestellt wird, ob die Erfassungseinrichtung (17) aktiviert ist (Stufe 102; 201),
der Schrittmotor (23) um einen Schritt betätigt wird, um das Drosselventil in Richtung auf die voll geöffnete Position zu bewegen, in dem Fall, dass die Erfassungseinrichtung nicht aktiviert ist (Schritt 103; 202),
der Schrittmotor um einen Schritt betätigt wird, um das Drosselventil in Richtung auf seine Schließrichtung zu bewegen, in dem Fall, dass die Erfassungseinrichtung aktiviert ist (Schritt 104; 203; 105; 204) und
das Bezugssignal geliefert wird, in dem Fall, dass bestimmt ist, dass die Erfassungseinrichtung deaktiviert ist (Schritt 106; 208).

## Revendications

1. Un dispositif de papillon d'admission installé dans un moteur Diesel comprenant :
un papillon d'admission (4) ouvrant et fermant un passage d'admission du moteur Diesel ;
un moteur pas à pas (23) pour ouvrir et fermer le papillon d'admission ;
des moyens de détection de position de référence (17) pour détecter que le papillon d'admission occupe une position de référence prévue dans une plage d'ouverture haute du papillon d'admission, de manière à délivrer un signal de position de référence ;
des moyens de retour à la position de référence (19, 20) déterminant que le moteur Diesel en fonctionnement est dans un état tel que son état de fonctionnement de celui-ci peut être maintenu lorsque le papillon d'admission occupe la position de référence, et actionnant le moteur pas à pas de sorte que le papillon d'admission occupe la position de référence ; et
des moyens (45, 46) recevant le signal de position de référence pendant le fonctionnement des moyens de retour à la position de référence pour initialiser le nombre de pas du moteur pas à pas.

2. Un dispositif de papillon d'admission selon la revendication 1, dans lequel la position de référence est une position de pleine ouverture du papillon d'admission (4).

3. Un dispositif de papillon d'admission selon la revendication 1 ou 2, dans lequel le fonctionnement des moyens de retour à la position de référence est démarré sur la base du régime du moteur Diesel et du degré d'ouverture du papillon d'admission (4).

4. Un dispositif de papillon d'admission selon l'une quelconque des revendications 1 à 3, comprenant en outre des moyens pour effectuer un traitement pour faire face à une état anormal dans le cas où le nombre de pas du moteur pas à pas est en dehors d'une plage admissible lorsque le signal de position de référence est délivré aux moyens d'initialisation.

5. Un dispositif de papillon d'admission selon la revendication 2, dans lequel le signal de position de référence est délivré lorsque les moyens de détection de position de référence (17) prévus à la position de pleine ouverture du papillon d'admission sont activés et ensuite désactivés, en
déterminant si les moyens de détection (17) sont activés (étape 102 ; 201),
déplaçant le moteur pas à pas (23) d'un pas afin de déplacer le papillon d'admission vers la position de pleine ouverture dans le cas où les moyens de détection ne sont pas activés (étape 103 ; 202),
déplaçant le moteur pas à pas (23) d'un pas afin de déplacer le papillon d'admission dans sa direction de fermeture dans le cas où les moyens de détection sont activés (étape 104 ; 203 ; 105 ; 204) et
délivrant ledit signal de référence dans le cas où il est déterminé que les moyens de détection sont désactivés (étape 106 ; 208).
